# EUROPEAN PATENT APPLICATION

(11) **EP 1 962 206 A2**
(43) Date of publication of application: **27.08.2008**
(21) Application number: 08001963.1
(22) Date of filing: 01.02.2008
(51) Int. Cl.: G06F 17/30, H04L 29/08

(54) **Mobile communication terminal and method for accessing the internet using a mobile communication terminal**

(30) Priority: 23.02.2007 KR 20070018580
(71) Applicant: LG Electronics Inc., Seoul 150-010 (KR)
(72) Inventor: Ham, Kang Sic, Seoul, 153-801 (KR)
(74) Representative: Katérle, Axel

(57) **Abstract**

A mobile communication terminal and method for accessing the Internet is provided, by which internet access can be facilitated by displaying homepage information set by a user together with variable homepage information in accordance with access information on an accessed homepage. The present invention includes displaying user setup homepage information and variable homepage information together, selecting a homepage from the displayed homepage information, and accessing the selected homepage.

## Description

This application claims the benefit of the Korean Patent Application No. 10-2007-0018580, filed on February 23, 2007, which is hereby incorporated by reference as if fully set forth herein.

### BACKGROUND OF THE INVENTION

### Field of the Invention

The present invention is directed to a mobile communication terminal, and more specifically, to a mobile communication terminal and method for accessing the Internet using a mobile communication terminal.

### Discussion of the Related Art

Methods of searching for information via the Internet generally include using a specific engine via wired Internet access of a personal computer (PC) or using a terminal equipped with an Internet access function. A user must use a URL (uniform resource locator) of a specific website in order to access the corresponding website if web browsing is performed via Internet access using a mobile communication terminal. However, it is inconvenient for a user to input Internet addresses of the websites one-by-one after accessing a wireless web browser built into a terminal.

### SUMMARY OF THE INVENTION

In one aspect of the present invention, a method of accessing the Internet in a mobile communication terminal is provided. The method includes displaying homepage information includes user setup homepage information and variable homepage information together, receiving an indication of selection of a homepage from the displayed homepage information and accessing the selected homepage.

It is contemplated that the displayed user setup homepage information and variable homepage information are represented in list form. It is further contemplated that the displayed user setup homepage information and variable homepage information are represented as at least two items and a homepage list corresponding to one of the at least two represented items is displayed together with the user setup homepage information and the variable homepage information.

It is contemplated that displaying the homepage information includes representing the user setup homepage information and the variable homepage information as at least two items, receiving an indication of selection of one of the at least two represented items and displaying an enlarged homepage list corresponding to the selected item. It is further contemplated that the variable homepage information includes at least one of a most frequently accessed homepage list, a recently accessed homepage list, and a longest accessed homepage list.

It is contemplated that the method further includes moving at least one homepage in the variable homepage information list to the user setup homepage information list. It is further contemplated that the at least one homepage is moved to a region of the user setup homepage information by a touching and dragging action.

It is contemplated that the variable homepage information is updated based on access information of the accessed homepage. It is further contemplated that the access information includes at least one of an access initiation time, an access maintaining time, and an access count of the accessed homepage. Preferably, the variable homepage information is updated if an access initiation time of the access homepage is equal to or later than a preset critical time.

In another aspect of the present invention a mobile communication terminal is provided. The mobile communication terminal includes a storage unit storing homepage information including user setup homepage information and variable homepage information, a display unit displaying both the user setup homepage information and the variable homepage information stored in the storage unit, an input unit for inputting a key signal corresponding to a selection of a homepage from the displayed homepage information, a control unit generating an access command signal corresponding to the selected homepage and a wireless communication unit accessing the selected homepage according to the access command signal.

It is contemplated that the control unit controls the display unit to represent the user setup homepage information and the variable homepage information in list form. It is further contemplated that the control unit controls the display unit to represent the user setup homepage information and the variable homepage information as at least two items and to display a homepage list corresponding to one of the at least two represented items together with the user setup homepage information and the variable homepage information.

It is contemplated that the control unit controls the display unit to represent the user setup homepage information and the variable homepage information as at least two items and to display an enlarged homepage list corresponding to a selected item upon selection of one of the at least two represented items via manipulation of the input unit. It is further contemplated that the variable homepage information includes at least one of a most frequently accessed homepage list, a recently accessed homepage list and a longest accessed homepage list.

It is contemplated that the input unit includes at least one of a scroll key and a rotary key. It is further contemplated that the control unit determines the homepage to access by receiving a signal from the at least one of a scroll key and rotary key and moving a cursor displayed on the display unit.

It is contemplated that the control unit determines the homepage to access by receiving a signal from a shortcut key provided on the input unit, the shortcut key corresponding to a specific homepage. It is further contemplated that the control unit controls the display unit to move at least one homepage in the variable homepage information list to the user setup homepage information list.

It is contemplated that the input unit includes a touchscreen and the control unit moves the at least one homepage when the at least one homepage is touched and dragged to a region of the user setup homepage information list. It is further contemplated that the control unit updates the variable homepage information based on access information of the accessed homepage.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a block diagram of a mobile communication terminal according to one embodiment of the present invention.

FIG. 2 is a flowchart of a method for accessing the Internet using a mobile communication terminal according to one embodiment of the present invention.

FIG. 3 is a flowchart of a process for updating a variable homepage shown in FIG. 2.

FIGS. 4 to 6 illustrate examples of displays for a user setup homepage list and a variable homepage list according to the present invention.

FIG. 7 is a diagram of a mobile communication terminal according to one embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

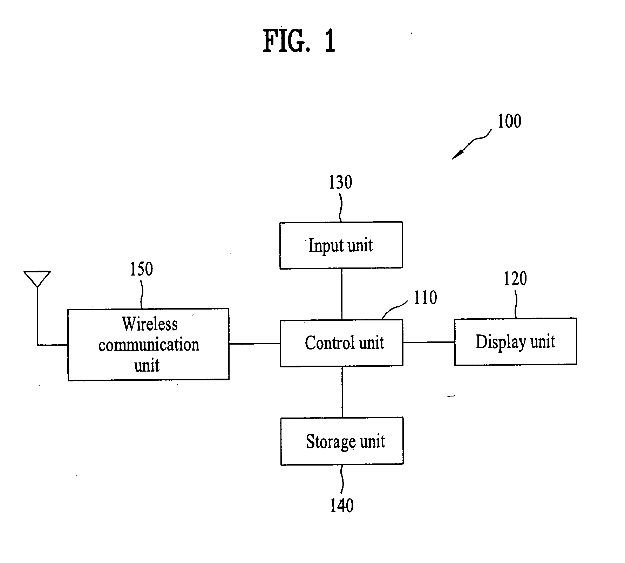

A mobile communication terminal according to the present invention may include a user-portable electronic device such as a mobile phone, a digital broadcast terminal, an MP3 player, a PDA (personal digital assistant or a PMP (portable multimedia player). FIG. 1 is a block diagram of a mobile communication terminal 100 according to one embodiment of the present invention. As illustrated in FIG. 1, the mobile communication terminal 100 includes a control unit 110, a display unit 120, an input unit 130, a storage unit 140, and a wireless communication unit 150.

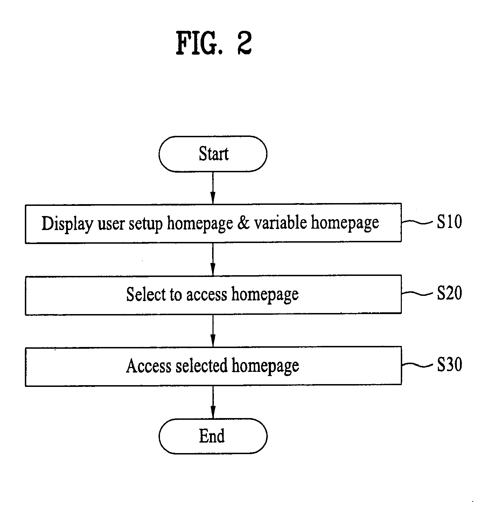

FIG. 2 is a flowchart of a method for accessing the Internet using a mobile communication terminal 100 according to one embodiment of the present invention. As illustrated in FIG. 2, user setup homepage information and variable homepage information are displayed together via the display unit 120 (S10). The 'user setup homepage information' refers to information such as a name of a user preferred homepage or a uniform resource locator (URL) of a corresponding website. The user setup homepage information is input via the input unit 130 when manipulated by a user and then stored in the storage unit 140.

A portion or the entire stored user setup homepage information is edited by the input unit 130 when manipulated by the user and then stored in the storage unit 140. For example, an address of Internet homepage such as 'www.naver.com' is stored as 'naver'. Therefore, a shortened name can be used as a homepage name corresponding to the Internet address.

The user setup homepage information can be displayed in list form in which homepage addresses or names stored in accordance with a user's preferences are written in predetermined order. The list form may be named 'user setup homepage list' for convenience.

The user is able to input an Internet homepage address or homepage name by manipulating the input unit 130. The user is also able to store the input homepage address or name in the user setup homepage list.

The input unit 130 can include, for example, a keypad, a touchscreen or a touchpad in accordance with a configuration of the mobile communication terminal 100. The input unit may also include a scroll key, a rotary key and/or a jog & shuttle. Use of a rotary key will be explained later.

The user setup homepage information can be displayed in a simple item form on the display unit 120 rather than as a list. For example, the user setup homepage information can be displayed as an item 'bookmark'. Both an item and a list corresponding to the list can be displayed together on the display unit 120 as the user setup homepage information.

As illustrated in FIG. 2, 'variable homepage information' refers to homepage information that varies in accordance with access information for a homepage accessed by a user. The variable homepage information can also be displayed on the display unit 120 in list form and can be named 'variable homepage list' for convenience. Examples of the variable homepage list are a recently accessed homepage list, a most frequently accessed homepage list or a longest accessed homepage list.

The recently accessed homepage list refers to a list of homepages, such as homepage names or homepage addresses, in order of most recent access time. The most frequently accessed homepage list refers to a list of homepages, such as homepage names or homepage addresses, in order of frequency of user access to homepages. The longest access homepage list refers to a list of homepages, such as homepage names or homepage addresses, according to length of access time.

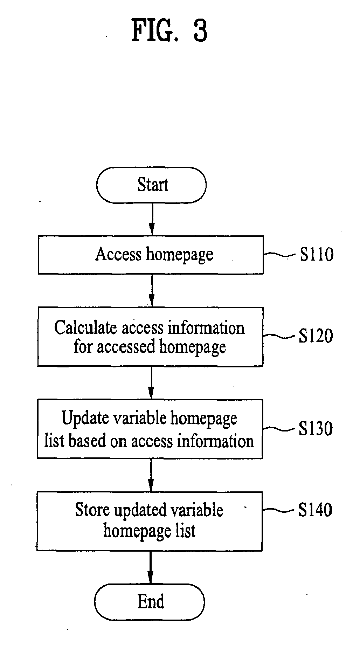

The variable homepage list can be updated based on access information. An updating method is explained with reference to FIG. 3, which is a flowchart of a process for updating the variable homepage referenced in FIG. 2.

As illustrated in FIG. 3, a user accesses a specific homepage using a mobile communication terminal 100 (S110). The specific homepage can be accessed in various ways. For example, a specific homepage can be accessed via a user setup homepage list by a user directly inputting a homepage address or via a variable homepage list.

Subsequently, access information for the specific homepage is calculated (S120). The 'access information' refers to information associated with homepage access. For example, the access information may include an access initiation time, an access maintaining time or an access count.

The access initiation time indicates a time at which access to a specific homepage is initiated, such as '10:00 a.m. January 1, 2007'. The access maintaining time can be a length of time for which access to a specific homepage is maintained, such as '2 hours and 10 minutes'. The access count is a count of a number of accesses to a specific homepage, such as '7 times'. In order to calculate the access count, a time period such as the most recent six months, can be determined.

A variable homepage list is updated according to the calculated access information and then stored in the storage unit 140 (S130, S140). For example, a variable homepage list that is a recently accessed homepage list may be updated based on an access time and a variable homepage that is a most frequently accessed homepage list may be updated based on an access count. The update may be performed, for example, in order to reorder a list, add a name or address of a homepage to a list, or delete a name or address of a homepage from a list.

The access information, which is a basis for the variable homepage list update, can be set to be calculated only if an access time is equal to or greater than a preset critical time. The access information may be insignificant if a user accesses a different homepage for very short time. This concept may be applied to perform update on the most frequently accessed home page. The critical time can be set by a user or set as a default in the mobile communication terminal 100.

The variable homepage information can be represented in a simple item form on the display unit 120 rather than as a list. For example, the variable homepage information can be represented as an item such as 'latest list'. Both an item and a list corresponding to the item can be displayed as the variable homepage information on the display unit 120.

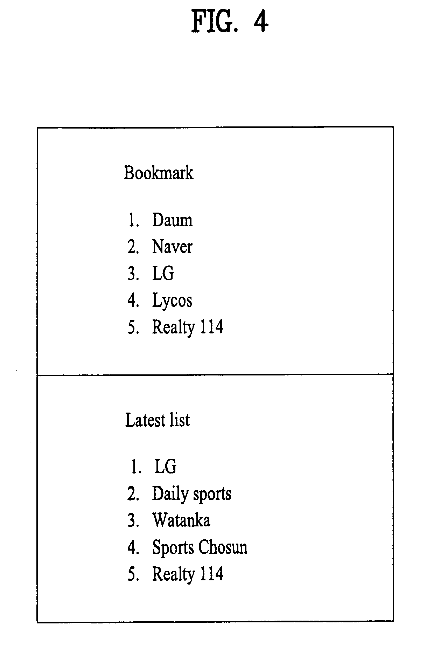

An example of representing user setup homepage information and variable homepage information in list form is shown in FIG. 4. As illustrated in FIG. 4, a name of a user setup homepage list can be represented as 'bookmark' and a name of a variable homepage list can be represented as 'latest list'.

A user is able to store at least one homepage name in a user setup homepage by copying or cutting the at least one homepage name from a variable homepage list. Specifically, at least one homepage among a plurality of homepages represented in the variable homepage list is touched and dragged to the user setup homepage list if the input unit 130 includes a touchscreen.

The number of homepages of a displayed list can be limited in accordance with a size of the display unit 120. For example, each user setup homepage list and each variable homepage list may be limited to five homepages.

If the number of displayed lists is limited to five, homepages from a sixth priority can be checked via manipulation of the input unit 130. For example, homepages from the sixth priority can be checked via a key signal input from a direction or numeral key. A user may manipulate a scroll key or a rotary key in order to perform this check.

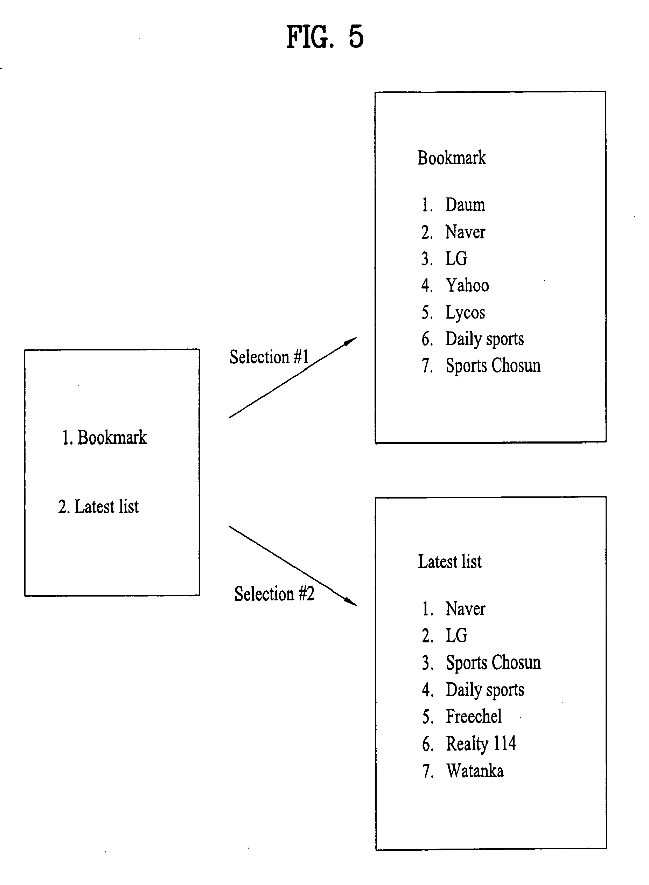

Alternatively, both user setup homepage information and variable homepage information can be represented in item form only, as illustrated in FIG. 5 As illustrated in FIG. 5, a prescribed item can be selected and a homepage list corresponding to the selected item is enlarged and displayed. In this way, the number of homepages listed in the user setup homepage list or the number of homepages listed in the variable homepage list may be limited such that they do not exceed a preset number.

The size of a picture of a list displayed on the display unit 120 is adjustable. Therefore, a user is able to view the list by adjusting the picture into a specific size.

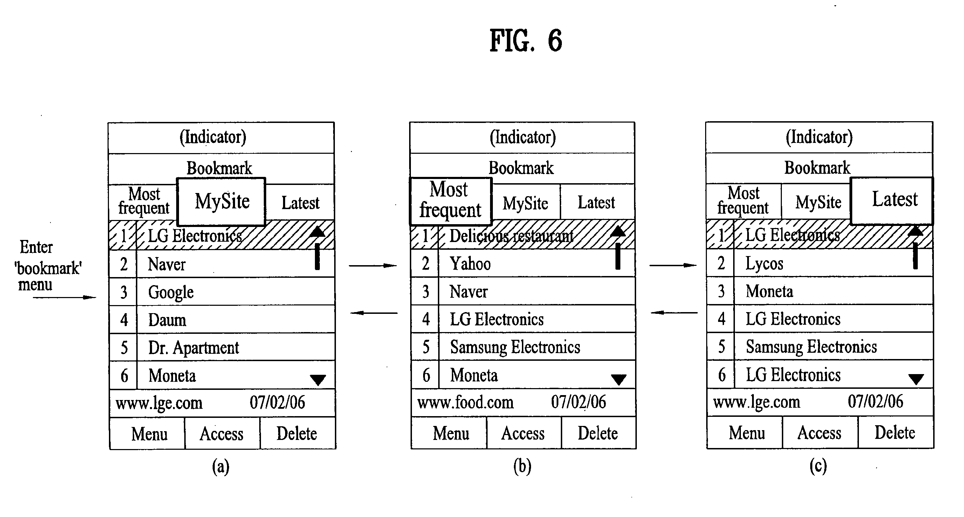

At least one of the user setup homepage information and the variable homepage information can be represented as a plurality of items on the display unit 120. A homepage list corresponding to one of a plurality of the displayed items can also be displayed, as illustrated in FIG. 6. For example, a picture displayed on the display unit 120 can be shifted via a direction key or a tab touch if the input unit 130 includes a touchscreen as shown by (a)↔(b)↔(c) in FIG. 6.

Referring again to FIG. 2, a user is able to select a specific homepage list from the homepage information represented, as illustrated in FIGS. 4 to 6 (S20). The item selection and the access homepage selection can be carried out via manipulation of the input unit 130.

As mentioned in the foregoing description, the input unit 130 can include at least one of a keypad, a touchscreen and a touchpad. The input unit 130 may further include at least one of a scroll key, a rotary key and a jog & shuttle.

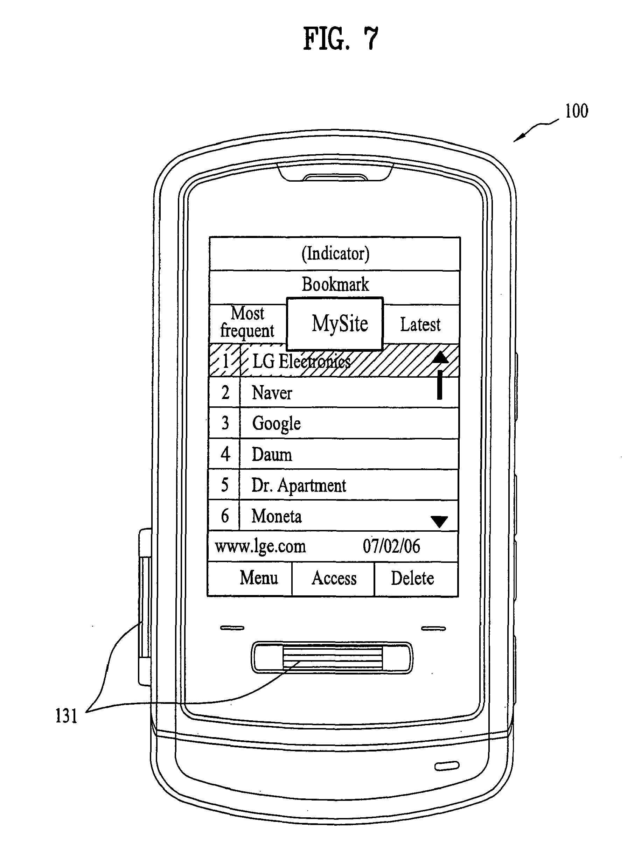

FIG. 7 is a diagram of a mobile communication terminal 100 according to one embodiment of the present invention. As illustrated in FIG. 7, the mobile communication terminal 100 includes a rotary key 131.

The rotary key 131 can be provided at various portions o the mobile communication terminal 100. For example, the rotary key 131 can be provided at a front side or a lateral side of the mobile communication terminal 100.

The rotary key 131 is a key input device having a rotational shaft (not shown) provided within a cylindrical bar shape. Therefore, a body of the rotary key 131 is configured such that it is rotatable. A cursor can be shifted to a specific homepage to be accessed through rotation of the body. A user is able to select a homepage to access and the selection is facilitated by manipulation of the rotary key 131.

Alternatively, selection of the homepage can be performed via a signal input from a shortcut key provided as part of the input unit 130 and matched to a specific homepage. For example, the shortcut key may include a numeral key (not shown) such that 'daum' can be selected if a user inputs numeral key '4'.

Referring again to FIG. 2, the selected Internet homepage is accessed (S30). Specifically, access can be made through the wireless communication unit 150 in accordance with an access command signal generated from the control unit 110.

Although a mobile terminal and a method for accessing the Internet are described herein, the present invention is not limited to Internet access only. For example, the present invention is also applicable to broadcast channel access using a mobile communication terminal.

The present invention provides several effects or advantages. First, both a homepage list set up by a user and another homepage list that is variable in accordance with access information of an accessed homepage are displayed together, thereby facilitating internet access. Second, the present invention diversifies configurations of an input unit, thereby facilitating Internet access.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A method of accessing the Internet in a mobile communication terminal, the method comprising:
displaying homepage information comprising user setup homepage information and variable homepage information together;
receiving an indication of selection of a homepage from the displayed homepage information; and
accessing the selected homepage.

2. The method of claim 1, wherein the displayed user setup homepage information and variable homepage information are represented in list form.

3. The method of claim 1, wherein the displayed user setup homepage information and variable homepage information are represented as at least two items and a homepage list corresponding to one of the at least two represented items is displayed together with the user setup homepage information and the variable homepage information.

4. The method of claim 1, wherein displaying the homepage information comprises:
representing the user setup homepage information and the variable homepage information as at least two items;
receiving an indication of selection of one of the at least two represented items; and
displaying an enlarged homepage list corresponding to the selected item.

5. The method of claim 1, wherein the variable homepage information comprises at least one of a most frequently accessed homepage list, a recently accessed homepage list, and a longest accessed homepage list.

6. The method of claim 2, further comprising moving at least one homepage in the variable homepage information list to the user setup homepage information list.

7. The method of claim 6, wherein the at least one homepage is moved to a region of the user setup homepage information by a touching and dragging action.

8. The method of claim 5, wherein the variable homepage information is updated based on access information of the accessed homepage.

9. The method of claim 8, wherein the access information comprises at least one of an access initiation time, an access maintaining time, and an access count of the accessed homepage.

10. The method of claim 8, wherein the variable homepage information is updated if an access initiation time of the access homepage is equal to or later than a preset critical time.

11. A mobile communication terminal comprising:
a storage unit storing homepage information comprising user setup homepage information and variable homepage information;
a display unit displaying both the user setup homepage information and the variable homepage information stored in the storage unit;
an input unit for inputting a key signal corresponding to a selection of a homepage from the displayed homepage information;
a control unit generating an access command signal corresponding to the selected homepage; and
a wireless communication unit accessing the selected homepage according to the access command signal.

12. The mobile communication terminal of claim 11, wherein the control unit controls the display unit to represent the user setup homepage information and the variable homepage information in list form.

13. The mobile communication terminal of claim 11, wherein the control unit controls the display unit to represent the user setup homepage information and the variable homepage information as at least two items and to display a homepage list corresponding to one of the at least two represented items together with the user setup homepage information and the variable homepage information.

14. The mobile communication terminal of claim 11, wherein the control unit controls the display unit to represent the user setup homepage information and the variable homepage information as at least two items and to display an enlarged homepage list corresponding to a selected item upon selection of one of the at least two represented items via manipulation of the input unit.

15. The mobile communication terminal of claim 11, wherein the variable homepage information comprises at least one of a most frequently accessed homepage list, a recently accessed homepage list and a longest accessed homepage list.

16. The mobile communication terminal of claim 11, wherein the input unit comprises at least one of a scroll key and a rotary key.

17. The mobile communication terminal of claim 16, wherein the control unit determines the homepage to access by receiving a signal from the at least one of a scroll key and rotary key and moving a cursor displayed on the display unit.

18. The mobile communication terminal of claim 11, wherein the control unit determines the homepage to access by receiving a signal from a shortcut key provided on the input unit, the shortcut key corresponding to a specific homepage.

19. The mobile communication terminal of claim 12, wherein the control unit controls the display unit to move at least one homepage in the variable homepage information list to the user setup homepage information list.

20. The mobile communication terminal of claim 19, wherein the input unit comprises a touchscreen and the control unit moves the at least one homepage when the at least one homepage is touched and dragged to a region of the user setup homepage information list.

21. The mobile communication terminal of claim 15, wherein the control unit updates the variable homepage information based on access information of the accessed homepage.
